**Europäisches Patentamt**

**European Patent Office**

**Office européen des brevets**

(19)

(11) Numéro de publication : **0 399 860 B1**

(12) **FASCICULE DE BREVET EUROPEEN**

(45) Date de publication du fascicule du brevet :
**23.03.94 Bulletin 94/12**

(51) Int. Cl.$^5$ : **G01S 3/80, G01S 11/00**

(21) Numéro de dépôt : **90401199.6**

(22) Date de dépôt : **04.05.90**

(54) **Procédé pour la détermination du mouvement d'une cible en acoustique sous-marine.**

(30) Priorité : **22.05.89 FR 8906662**

(43) Date de publication de la demande :
**28.11.90 Bulletin 90/48**

(45) Mention de la délivrance du brevet :
**23.03.94 Bulletin 94/12**

(84) Etats contractants désignés :
**DE GB**

(56) Documents cités :
**EP-A- 0 288 374**
**US-A- 4 162 474**

(56) Documents cités :
**JOURNAL OF ACOUSTICAL SOCIETY OF AMERICA, vol. 70, no. 4, octobre 1981, pages 1054-1061, New York, US; J.C. HASSAB et al.: "Estimation of location and motion parameters of a moving source observed from a linear array"**
**JOURNAL OF THE ACOUSTICAL SOCIETY OF AMERICA, vol. 76, no. 4, octobre 1984, pages 1114-1122, Acoustical Society of America, New York, US; F. DOMMERMUTH et al.: "Estimating the trajectory of an acceleration-less aircraft by means of a stationary acoustic sensor"**

(73) Titulaire : **THOMSON-CSF**
**173, Boulevard Haussmann**
**F-75008 Paris (FR)**

(72) Inventeur : **Van Cappel, Dominique**
**THOMSON-CSF, SCPI-Cedex 67**
**F-90245 Paris La Défense (FR)**

(74) Mandataire : **Lincot, Georges et al**
**THOMSON-CSF, SCPI, B.P. 329, 50, rue Jean-Pierre Timbaud**
**F-92402 Courbevoie Cédex (FR)**

Jouve, 18, rue Saint-Denis, 75001 PARIS

## Description

La présente invention concerne un procédé pour la détermination du mouvement d'une cible en acoustique sous-marine.

Il est connu en acoustique sous-marine de détecter la position et le mouvement de cibles immergées au moyen d'une antenne mobile immergée formée par exemple par trois capteurs séparés spatialement les uns des autres. Cette antenne permet de mesurer les différences entre les temps de propagation d'un signal émis par une cible mobile vers les différents capteurs. Dans la plupart des dispositifs connus et dont une description peut être trouvée dans l'article de la revue JASA 70(4), Oct. 1981 ayant pour titre "Estimation of location and motion parameters of a moving source observed from a linear array" et pour auteur JC HASSAB, B. GUIMOND, S.C. NARDONE ou encore dans la communication IEEE de D.J. MURPHY ayant pour titre " Target tracking with a linear array in an underwater environment" de novembre 1981, les capteurs sont alignés et le capteur intermédiaire est rigoureusement placé à demi-distance des deux autres. Cependant en pratique cette disposition est difficile à respecter et les défauts d'alignements et de position des capteurs introduisent des erreurs sur l'estimation du positionnement et du mouvement des cibles.

Le but de l'invention est de pallier les inconvénients précités.

A cet effet, l'invention a pour objet, un procédé pour la détermination du mouvement d'une cible en acoustique sous-marine au moyen d'une antenne à capteurs désalignés ($C_1$, $C_2^P$, $C_3$) munie d'un capteur central $C_2^P$ du type consistant à estimer les caractéristiques de vitesse ($V_x$, $V_y$) et de position de la cible ($x(t^*)$, $y(t^*)$ relativement à l'antenne au moyen d'un estimateur de maximum de vraisemblance prenant en compte les différences de temps de propagation mesurés entre les fronts d'ondes transmis par la cible et arrivant sur les capteurs caractérisé en ce qu'il consiste à initialiser l'estimateur de mouvement au moyen d'un vecteur d'état X initial déterminé à partir des valeurs des azimuts de la cible perçus des milieux de chaque paire de capteur, durant un nombre déterminé de mesures échelonnées dans le temps, et à estimer le vecteur d'état X en prenant en compte la valeur du site de la cible par rapport à l'antenne.

D'autres caractéristiques et avantages de l'invention apparaîtront ci-après à l'aide de la description faite en regard des dessins annexés qui représentent :

- la figure 1 : la position d'une cible relativement d'une part, à une antenne formée de trois capteurs acoustiques alignés et d'autre part, à une antenne formée par trois capteurs acoustiques désalignés ;
- la figure 2 : un organigramme de l'algorithme utilisé.

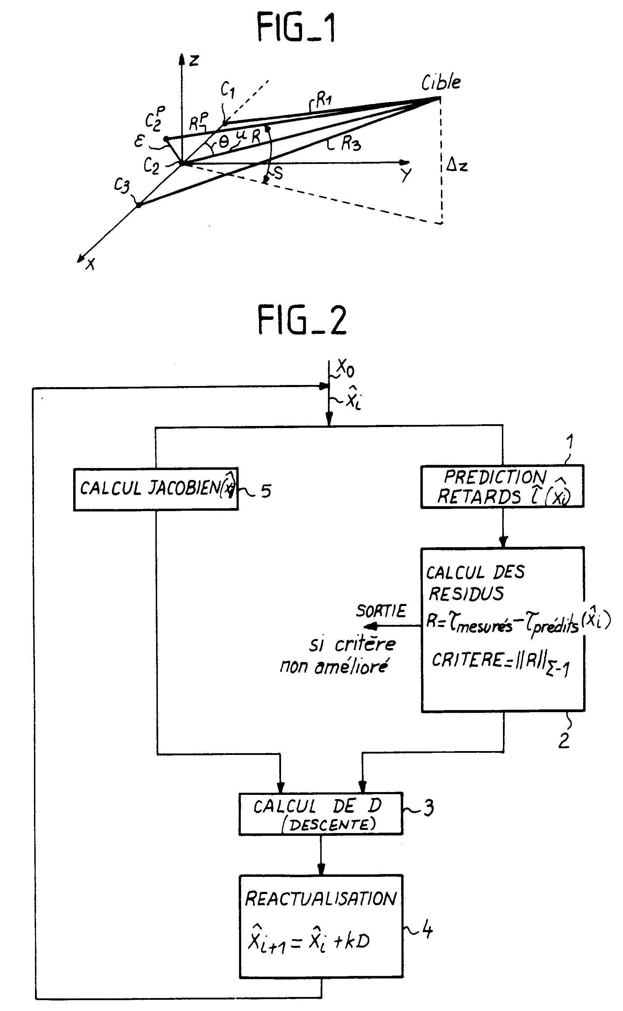

Sur la figure 1, l'antenne alignée est figurée par trois capteurs $C_1$, $C_2$ et $C_3$ et l'antenne désalignée est figurée par les capteurs $C_1$, $C_3$ et $C_2^P$, la position du capteur $C_2^P$ résultant d'une translation du capteur central $C_2$ de l'antenne alignée suivant un vecteur de désalignement ayant ses extrémités confondues avec les positions du capteur $C_2$ et du capteur $C_2^P$. Suivant cette configuration le vecteur peut occuper une direction quelconque de l'espace autour de la position idéale du capteur $C_2$, son module restant relativement faible vis-à-vis de la distance L qui sépare deux capteurs consécutifs $C_1$, $C_2$ ou $C_2$, $C_3$ de l'antenne alignée.

En considérant seulement ce qui se passe avec une antenne alignée, la distance R qui sépare le capteur central $C_2$ de la cible et le gisement $\theta$ de la cible par rapport à la direction d'alignement des capteurs $C_1$, $C_2$ et $C_3$, sont obtenus simplement à partir des différences de temps de propagation $\tau_{12}$ et $\tau_{23}$ ou écart de temps de chaque front d'onde provenant de la cible et atteignant les capteurs $C_1$-$C_2$ et $C_2$-$C_3$. Ces écarts de temps sont définis par les relations :

$$\tau_{12} = \frac{R_1 - R}{c} \quad (1)$$

$$\tau_{13} = \frac{R - R_3}{c} \quad (2)$$

où $R_1$ et $R_3$ sont des distances qui séparent respectivement les capteurs $C_1$ et $C_3$ de la cible et c la vitesse de propagation du son dans le milieu dans lequel l'antenne est immergée. En se limitant aux termes du deuxième ordre, $\theta$ et R sont définis en fonction des différences de temps de propagation $_{12}$ et $_{23}$ par les relations :

$$\cos \theta = \frac{-c(\tau_{12} + \tau_{23})}{2L} \quad (3)$$

$$\frac{1}{R} = \frac{c(\tau_{12} - \tau_{23})}{L^2 \sin^2\theta} \quad (4)$$

Naturellement, en présence d'une antenne désalignée les différences de temps de propagation obtenues ne sont plus égales aux écarts de temps $\tau_{12}$ et $\tau_{13}$. En se limitant aux termes du premier ordre en la distance $R^P$ séparant le capteur $C_2^P$ de la cible est alors définie par une expression de la forme

$$R^P = R.<\underline{u}, \underline{\varepsilon}> \quad (5)$$

où u représente le vecteur normalisé de la direction de la cible et <,> symbolise un produit scalaire.

Les différences de temps de propagation $\tau_{12}^P$ et $\tau_{23}$ de l'onde sonore provenant de la cible entre respectivement des capteurs $C_1$-$C_2^P$ et $C_2^P$-$C_3$ sont définis par des relations de la forme

$$\tau_{12}^P = \tau_{12} + <\underline{u},\varepsilon/c> \quad (6)$$

$$\tau_{23}^P = \tau_{23} - <\underline{u},\varepsilon/c> \quad (7)$$

Les relations 6 et 7 montrent que le désalignement des capteurs sur l'antenne a une incidence sur les temps de propagation mesurés par les capteurs et qu'il doit avoir, par voie de conséquence, une incidence également sur le calcul de la position de la cible. Notamment l'appréciation de la distance R doit être considérée comme biaisée de la valeur

$$\text{Bias}\left(\frac{1}{R}\right) = \frac{2<u,\varepsilon>}{L^2\sin^2\theta} \quad (8)$$

Si à la fois le défaut d'alignement $\varepsilon$ et la direction u sont parfaitement connus, la valeur biaisée de la distance est parfaitement déterminable par la relation 8.

Cependant, en pratique, seul est parfaitement déterminable et il subsiste toujours une erreur d'appréciation de la direction u de la cible.

En considérant un repère orthornormé (o, x, y, z) la relation 8 doit être considérée comme résultant de la somme d'une distance biaisée dans le plan horizontal (o, x, y) et d'une distance biaisée dans une direction verticale oz normale à ce plan telle que :

$$\text{Bias}\left(\frac{1}{R}\right) = \text{Bias}_1\left(\frac{1}{R}\right) + \text{Bias}_2\left(\frac{1}{R}\right) \quad (9)$$

$$\text{Bias}_1\left(\frac{1}{R}\right) = \frac{2}{L^2\sin^2\theta}(\delta u_x\varepsilon_x + \delta u_y\varepsilon_y) \quad (10)$$

$$\text{Bias}_2\left(\frac{1}{R}\right) = \frac{2}{L^2\sin^2\theta}\delta u_z\varepsilon_z$$

Lorsque la cible est localisée dans le plan horizontale les composantes du vecteur u dans ce plan, $u_x$ et $u_y$, peuvent être estimées correctement. Les erreurs $\delta u_x$ et $\delta u_y$ sont très voisines de 0 et le biais sur la distance est surtout déterminé par l'incertitude sur $\delta u_z$.

Le Biais(R) s'exprime en fonction du biais de 1 suivant la relation

$$\text{Bias}(R) = \frac{-R^2\text{Bias}\left(\frac{1}{R}\right)}{1 + R\text{Bias}\left(\frac{1}{R}\right)} \quad (12)$$

soit

$$\text{Bias}(R) = -\frac{\alpha}{1+\alpha}R \quad (13)$$

avec

$$\alpha = \frac{2\varepsilon_z\Delta z}{L^2\sin^2\theta}$$

A titre indicatif un désalignement vertical de 10 cm, pour une profondeur de cible de 400 mètres peut provoquer un biais sur la distance d'environ 11%.

Il résulte de ce qui précède, qu'il est indispensable de tenir compte de la profondeur des cibles, pour déterminer une poursuite précise de celles-ci lorsque les antennes utilisées ne sont pas parfaitement linéaires.

Selon l'invention, la profondeur de la cible est soit déterminée par un calcul de son site relativement à l'antenne ou encore mesurée par une antenne sonar directive en site.

Dans les calculs qui vont suivre la cible est supposée se déplacer à vitesse constante V dans un plan horizontal d'immerzion Z. Selon la première méthode, l'angle de site est estimé à partir de l'ensemble de mesures des écarts du temps de trajets.

Toutes les coordonnées sont données dans un repère cartésien géographique d'origine quelconque. La cible est déterminée à chaque instant par un vecteur d'état X tel que :

$$X = [x(t^*), y(t^*), V_x, V_y, S(t^*)]^T$$

où $x(t^*)$ et $y(t^*)$ définissent les composantes de distance du vecteur dans un plan horizontal et $V_x$ et $V_y$ ses composantes de vitesse dans ce même plan. Ce vecteur est naturellement relatif à l'instant d'estimation $t^*$ et est utilisé pour reconstruire par intégration la trajectoire $X_t$, $Y_t$ de la cible.

A tout instant l'écart de temps entre les capteurs $C_k$ et $C_1$ par exemple est déterminé par une relation de la forme :

$$\tau_{ki}(t) = \frac{R_k(t) - R_i(t)}{c} \quad (14)$$

La distance $R_{k(t)}$ séparant la cible du capteur $C_k$ est donnée par une relation de la forme :

$$R_k(t) = \sqrt{d_k(t)^2 + (z - C_{k_z}(t))^2} \quad (15)$$

où $d_k$ qui figure la distance horizontale de la cible par rapport au capteur, est définie par :

$$d_k(t)^2 = (x(t) - C_{k_x}(t))^2 + (y(t) - C_{k_y}(t))^2 \quad (16)$$

Le terme d'immersion est calculé en faisant intervenir l'immersion du capteur central $C_2$ à l'instant t, il est défini par la relation :

$$z - C_{k_z}(t) = (z - C_{2_z}(t^*)) + (C_{2_z}(t^*) - C_{k_z}(t)) \quad (17)$$
$$= R_z(t^*)\sin S(t^*) + (C_{2_z}(t^*) - C_{k_z}(t))$$

Les formules précédentes (14) à (17) permettent de prédire les écarts de temps $\tau(X)$ en fonction du vecteur d'état X à estimer.

L'algorithme d'estimation est défini à la manière représentée à la figure 2. Il consiste à l'étape 1 à prédire à l'aide des relations (14) les écarts de temps en fonction de chaque vecteur d'état X, puis à calculer à l'étape 2 les résidus d'estimation entre les valeurs d'écarts de temps mesurés entre chaque capteur et les écarts de temps prédits. Ces calculs mettent en oeuvre de façon connue des estimateurs de maximum de vraisemblance et de moindre carré, qui donnent une valeur estimée $\hat{X}$ du vecteur d'état X lorsque les valeurs des écarts de temps $\tau(X)$ prédits et mesurés sont minimum. Cette minimisation est réalisée par exemple en utilisant un algorithme itératif connu représenté aux étapes 3 et 4 du type GAUSS NEWTON.

Selon cet algorithme, la valeur $\hat{X}_{i+1}$ estimée du vecteur d'état obtenu à la i+1eme itération est défini à partir de la valeur estimée Xi obtenu à la ième itération par une relation de la forme :

$$\hat{X}_{i+1} = \hat{X}_i + \mu D_i \quad (18)$$

où $D_i$ est une valeur de descente obtenue par résolution d'un problème aux moindres carrés qui minimise le critère tel que :

$$(19)$$
$$\underset{D}{\text{Min}} \, | \, J_i D - (\xi_m - \tau(\hat{X}_i)) \, |_{\Sigma}^{-1}$$

où $J_i$ est la matrice Jacobienne de la fonction $\tau(X)$ évaluée à chaque vecteur estimé $\hat{X}_i$.

Cette matrice est calculée à l'étape 5.

$\mu$ est un scalaire compris entre -1 et +1 choisi à chaque itération de manière à minimiser le critère. Les itérations s'arrêtent lorsque le critère ne diminue plus de façon significative.

Dans le procédé qui vient d'être décrit l'algorithme de GAUSS NEWTON est initialisé par un estimateur pseudo-linéaire dérivé de la méthode de trajectographie par azimuts décrite par exemple dans l'article IEEE Transactions on Automatic Control, Vol. AC-29. N° 9, de sept. 1984 de MM. S.C. NARDONE, A.G. LINDGREN et K.F. GONG ayant pour titre "Fundamental properties and performance of conventional Bearings-only target motion analysis". Ce procédé consiste selon une première étape à calculer la valeur de l'angle Ak que fait la direction d'un méridien du geoïde terrestre avec la demi-droite joignant le milieu de l'espace compris entre les capteurs $C_k$ et $C_1$ et la cible.

Ce calcul est effectué en appliquant la relation :

$$A_{k1} = A\cos \frac{-c \, \tau_{k1}}{L_{k1}} + \text{Angle}(\text{Nord},[C_k,C_1]) \quad (20)$$

Selon une deuxième étape la valeur de l'azimut est mis en équation suivant la relation

$$\left( \begin{array}{cccc} \cos A_{k1} & -\sin A_{k1} & (t-t^*)\cos A_{k1} & -(t-t^*)\sin A_{k1} \end{array} \right) \begin{pmatrix} x(t^*) \\ y(t^*) \\ V_x \\ V_y \end{pmatrix} = l_{k1_x}\cos A_{k1} - l_{k1_y}\sin A_{k1} \quad (21)$$

Et enfin suivant une troisième étape les trois paires de capteurs et les n instant de mesure sont considérés pour résoudre un système linéaire obtenu à partir de la relation précédente dont la résolution s'effectue au sens des moindre carré, pondérés par $\Sigma^{-1}$.

Cette estimation pseudo-linéaire permet d'initialiser l'algorithme de GAUSS NEWTON en position et en vitesse, le site initial étant choisi arbitrairement nul.

Le procédé qui vient d'être décrit peut encore éventuellement être adapté aux situations dans lesquelles la mesure du site peut être effectuée par une antenne sonar indépendante. En effet si en plus du dispositif d'antenne qui vient d'être décrit un sonar délivre à chaque instant une mesure du site relevé de la cible, il peut être judicieux d'utiliser ces données pour effectuer le calcul de la trajectographie de la cible. Dans ce cas le procédé de calcul utilise une méthode qui est très similaire à la précédente. En référençant les sites par rapport au capteur central, l'équation de prédiction des sites est alors

$$S(t) = A\sin \frac{R_2(t^*)\,\sin S(t^*) + C_{2_z}(t^*) - C_{2_z}(t)}{R_2(t)} \quad (22)$$

Les sites prédits sont alors à inclure dans le vecteur des écarts de temps $\tau(X)$ tandis que les sites mesurés sont à inclure dans le vecteur des écarts de temps mesurés.

Pour initialiser l'algorithme de GAUSS NEWTON le site qui est pris en compte est égal à la moyenne des sites obtenus soit :

$$(23)$$

$$\bar{S} = \frac{1}{N}\sum_{1}^{N} S(t_j)$$

Cette valeur de site est ensuite prise en compte pour le calcul des azimuts suivant la relation :

$$A_{k1} = A\cos \frac{-c\,\tau_{k1}}{L_{k1}\cos S} + \text{Angle (Nord},[C_k,C_1]) \quad (24)$$

La mise en oeuvre du procédé de l'invention pourra être avantageusement effectuée au moyen d'un ou plusieurs microprocesseurs de traitement du signal convenablement programmés. Cette mise en oeuvre est à la portée de l'homme de l'art.

## Revendications

1. Procédé pour la détermination du mouvement d'une cible en acoustique sous-marine au moyen d'une antenne à capteurs désalignés ($C_1$, $C_2^P$, $C_3$) munie d'un capteur central $C_2^P$ du type consistant à estimer les caractéristiques de vitesse ($V_x$, $V_y$) et de position de la cible ($x(t^*)$, $y(t^*)$) relativement à l'antenne au moyen d'un estimateur de mouvement de maximum de vraisemblance prenant en compte les différences de temps de propagation mesurés entre les fronts d'ondes transmis par la cible et arrivant sur les capteurs caractérisé en ce qu'il consiste à initialiser l'estimateur de mouvement au moyen d'un vecteur d'état X initial déterminé à partir des valeurs des azimuts de la cible perçus des milieux de chaque paire de capteur, durant un nombre déterminé de mesures échelonnées dans le temps, et à estimer le vecteur d'état X en prenant en compte la valeur du site de la cible par rapport à l'antenne.

2. Procédé selon la revendication 1, caractérisé en ce que l'estimateur de mouvement de maximum de vraisemblance met en oeuvre un algorithme itératif de type GAUSS NEWTON.

3. Procédé selon la revendication 2, caractérisé en ce que pour l'initialisation de l'algorithme GAUSS NEWTON, les coordonnées horizontales de la position de la cible et ses vecteurs vitesses sont déterminés en résolvant un système d'équations déterminés pour chaque couple de capteur par la relation matricielle :

$$(\cos A_{kl} \;-\; \sin A_{kl} \;\; (t-t^*)\cos A_{kl} \;-\; (t-t^*)\sin A_{Kl}) \begin{pmatrix} x(t^*) \\ y(t^*) \\ V_x \\ V_y \end{pmatrix}$$

$$= I_{kx}\cos A_{kl} \;-\; I_{kiy}\sin A_{kl}.$$

**4.** Procédé selon l'une quelconque des revendications 1 et 2, caractérisé en ce que la valeur du site est calculée en faisant intervenir l'immersion du capteur central à l'instant de l'estimation.

**5.** Procédé selon l'une quelconque des revendications 1 à 4, caractérisé en ce que la valeur du site est mesurée à partir d'une antenne sonar supplémentaire.

**6.** Procédé selon les revendications 2, 3 et 5, caractérisé en ce que l'algorithme de GAUSS NEWTON est initialisé en tenant compte de la moyenne des sites mesurés durant un nombre déterminé N de mesures.

**Claims**

**1.** Method for determining the motion of a target by means of underwater acoustics by using an antenna having misaligned sensors ($C_1$, $C_2^P$, $C_3$) and equipped with a central sensor $C_2^P$ of the type consisting in estimating the velocity ($V_x$, $V_y$) and position characteristics of the target ($x(t^*)$, $y(t^*)$) relative to the antenna by means of a maximum likelihood motion estimator which takes account of the differences in propagation times measured between the wavefronts transmitted by the target and arriving at the sensors, characterized in that it consists in initializing the motion estimator by means of an initial state vector X determined from the values of the target's azimuths perceived from the middles of each sensor pair, over a specified number of measurements staggered over time, and in estimating the state vector X taking into account the value of the elevation of the target with respect to the antenna.

**2.** Method according to Claim 1, characterized in that the maximum likelihood motion estimator employs an iterative GAUSS NEWTON type algorithm.

**3.** Method according to Claim 2, characterized in that for the initialization of the GAUSS NEWTON algorithm, the horizontal coordinates of the position of the target and its velocity vectors are determined by solving a system of equations determined for each sensor pair by the matrix relation :

$$(\cos A_{kl} - \sin A_{kl} \, (t-t^*) \cos A_{kl} - (t-t^*) \sin A_{Kl}) \begin{pmatrix} x(t^*) \\ y(t^*) \\ V_x \\ V_y \end{pmatrix}$$

$$= I_{kx} \cos A_{kl} - I_{kiy} \sin A_{kl}.$$

**4.** Method according to either one of Claims 1 and 2, characterized in that the calculation of the value of the elevation includes the submersion of the central sensor at the instant of estimation.

**5.** Method according to any one of Claims 1 to 4, characterized in that the value of the elevation is measured from an additional sonar antenna.

**6.** Method according to Claims 2, 3 and 5, characterized in that the initialization of the GAUSS NEWTON algorithm takes into account the mean of the elevations measured over a specified number N of measurements.

**Patentansprüche**

**1.** Verfahren zur Bestimmung der Bewegung eines Ziels gemäß der Unterwasserakustik mit Hilfe einer Antenne aus nicht fluchtenden Sonden ($C_1$, $C_2^P$, $C_3$), zu denen eine zentrale Sonde $C_2^P$ gehört, wobei die Geschwindigkeitskennwerte ($V_x$, $V_y$) und die Lagekennwerte des Ziels ($x(t^*)$, $y(t^*)$) relativ zur Antenne mit Hilfe eines Bewegungsschätzorgans gemäß der größten Wahrscheinlichkeit geschätzt wird, das die Unterschiede der Fortpflanzungszeiten berücksichtigt, die zwischen den vom Ziel übertragenen Wellenfronten gemessen werden und an den Sonden ankommen, dadurch gekennzeichnet, daß das Verfahren darin besteht, das Bewegungsschätzorgan mit Hilfe eines ursprünglichen Zustandsvektors X zu initialisieren, der ausgehend von Azimutwerten des Ziels, die von jedem Sondenpaar aufgenommen werden, während einer bestimmten Anzahl von zeitlich gestaffelten Messungen bestimmt wird, und den Zustandvektor X zu schätzen unter Berücksichtigung des Elevationswerts des Ziels bezüglich der Antenne.

2. Verfahren nach Anspruch 1, dadurch gekennzeichnet, daß das Bewegungsschätzorgan nach dem Prinzip der höchsten Wahrscheinlichkeit einen iterativen Algorithmus vom Typ Gauss-Newton verwendet.

3. Verfahren nach Anspruch 2, dadurch gekennzeichnet, daß zur Initialisierung des Gauss-Newton-Algorithmus die horizontalen Lagekoordinaten des Ziels und seine Geschwindigkeitsvwektoren durch Lösung eines Gleichungssystems bestimmt werden, das für jedes Sondenpaar durch die folgende Matrixbeziehung definiert ist:

$$(\cos A_{kl} \quad -\sin A_{kl} \quad (t-t^*)\cos A_{kl} \quad -(t-t^*)\sin A_{kl} \quad \begin{pmatrix} x(t^*) \\ y(t^*) \\ V_x \\ V_Y \end{pmatrix}$$

$$= I_{kx}\cos A_{kl} - I_{kiy}\sin A_{kl}$$

4. Verfahren nach einem beliebigen der Ansprüche 1 und 2, dadurch gekennzeichnet, daß der Elevationswert berechnet wird, indem die Tauchtiefe der mittleren Sonde zum Schätzzeitpunkt berücksichtigt wird.

5. Verfahren nach einem beliebigen der Ansprüche 1 bis 4, dadurch gekennzeichnet, daß der Elevationswert mit Hilfe einer zusätzlichen Sonarantenne gemessen wird.

6. Verfahren nach den Ansprüchen 2, 3 und 5, dadurch gekennzeichnet, daß der Gauss-Newton-Algorithmus initialisiert wird, indem der Mittelwert der während einer bestimmten Anzahl N von Messungen ermittelten Elevationswerte berücksichtigt wird.

## FIG_1

## FIG_2